# EUROPEAN PATENT APPLICATION

(11) **EP 4 625 292 A1**
(43) Date of publication of application: **01.10.2025**
(21) Application number: 24218883.7
(22) Date of filing: 10.12.2024
(51) Int. Cl.: G06Q 20/20, G07G 1/00, G07G 1/01

(54) **POINT-OF-SALE TERMINAL, METHOD, AND STORAGE MEDIUM**

(30) Priority: 26.03.2024 JP 2024049792
(71) Applicant: Toshiba TEC Kabushiki Kaisha, Tokyo 141-8562 (JP)
(72) Inventor: Tou, Gyougei, Tokyo 141-8562 (JP)
(74) Representative: Bandpay & Greuter

(57) **Abstract**

A point-of-sale terminal includes a processor configured to: upon input of a customer code, acquire information regarding a customer, determine an age of the customer, and determine whether the age is a predetermined age or older, upon determining that the age is the predetermined age or older, start a first process including: generating and displaying first information indicating that the age has been verified, and upon input of an item code, registering an item, upon determining that the age is not the predetermined age or older, generating and displaying second information indicating that the age needs to be verified, and upon input of an item code, determining whether the item is an age-restricted item, upon determining that the item is an age-restricted item, suspending the item registration, and upon determining that the item is not an age-restricted item, registering the item.

## Description

### FIELD

Embodiments described herein relate generally to a point-of-sale (POS) terminal, a method, and a storage medium.

### BACKGROUND

In recent years, in a commercial facility such as a grocery store, a self-service POS system has been used so that a customer can complete a transaction from registering an item to checkout without involving a store clerk.

In such a self-service POS system, when a customer purchases an item requiring age-confirmation, the customer usually needs to call a store clerk and intervene during the registration operation. However, the work of verifying identification information or the like of the customer is a burden on the store side.

Therefore, there is a demand for a technique for reducing a workload for confirming identification information of a customer.

### SUMMARY OF THE INVENTION

Embodiments of the present disclosure provide a technique capable of simplifying a process for verifying identification information of a customer.

In one embodiment, a POS terminal for registering an item for purchase at a store comprises: a scanner; a display; and a processor configured to: at a beginning of a transaction, upon input of a customer code via the scanner, acquire customer information regarding a customer associated with the customer code, determine an age of the customer based on the acquired customer information, and determine whether the age of the customer is a predetermined age or older, upon determining that the age of the customer is the predetermined age or older, start a first process for registering an item, the first process including: generating a first screen image for item registration including first information indicating that the age of the customer has been verified, and controlling the display to display the first screen image, and upon input of an item code via the scanner when the first screen image is displayed, registering an item associated with the item code regardless of whether the item is an age-restricted item, upon determining that the age of the customer is not the predetermined age or older, generating a second screen image for item registration including second information indicating that the age of the customer needs to be verified, and controlling the display to display the second screen image, upon input of an item code via the scanner when the second screen image is displayed, determining whether an item associated with the item code is an age-restricted item, upon determining that the item is an age-restricted item, suspending the item registration until a code of a store clerk is input via the scanner, and after the code of the store clerk is input, registering or not registering the age-restricted item depending on an operation by the store clerk, and upon determining that the item is not an age-restricted item, registering the item, and in response to a predetermined operation, perform a payment process on the registered item.

### BRIEF DESCRIPTION OF THE DRAWINGS

FIG. 1 is a schematic block diagram illustrating a store system according to an embodiment.
FIG. 2 is a schematic block diagram illustrating a server according to an embodiment.
FIG. 3 is a schematic block diagram illustrating a POS terminal according to an embodiment.
FIG. 4 is a diagram showing an example of a screen displayed by the POS terminal.
FIG. 5 is a diagram showing another example of a screen displayed by the POS terminal.
FIG. 6 is a sequence diagram illustrating a process performed by the store system.
FIG. 7 is a flowchart illustrating a first process performed by the POS terminal.
FIG. 8 is a flowchart illustrating a second process performed by the POS terminal.

### DETAILED DESCRIPTION

Hereinafter, embodiments of this disclosure will be described in detail with reference to the drawings. Embodiments of this disclosure are not limited to the embodiments described below.

In the drawings used in the description of the following embodiments, the scale of each component may be changed as appropriate. In addition, the drawings used in the description of the following embodiments may be omitted for the sake of explanation.

Hereinafter, an example of a store that sells items will be described. Such a store is a non-online store and has actual sales floors. Hereinafter, the items sold at the store mean not only tangible objects but also services for customers or electronic tickets. That is, the store may be a store that mainly sells tangible objects or sells and provides services. For example, a store that mainly sells tangible items is a supermarket, a grocery store, a home center, or the like, but is not limited thereto. For example, a store that mainly sells services is a restaurant, a sports gym, or the like, but is not limited thereto.

A transaction of an item includes a sale of an item from the point of view of the store and the purchase of the item from the viewpoint of the customer.

For example, a store is operated by a business operator. The genre of the business operator may be any genre. For example, a business operator operates a plurality of stores. A business operator includes not only a single business operator but also a group of business operators. A group of business operators is a group that operates stores that are recognized as affiliates. For example, a group of operators is a group that operates stores operated under the same brand name. A group of business operators may include franchisees in which the operator is involved as a franchisor. A business operator may be an organization.

### (Configuration)

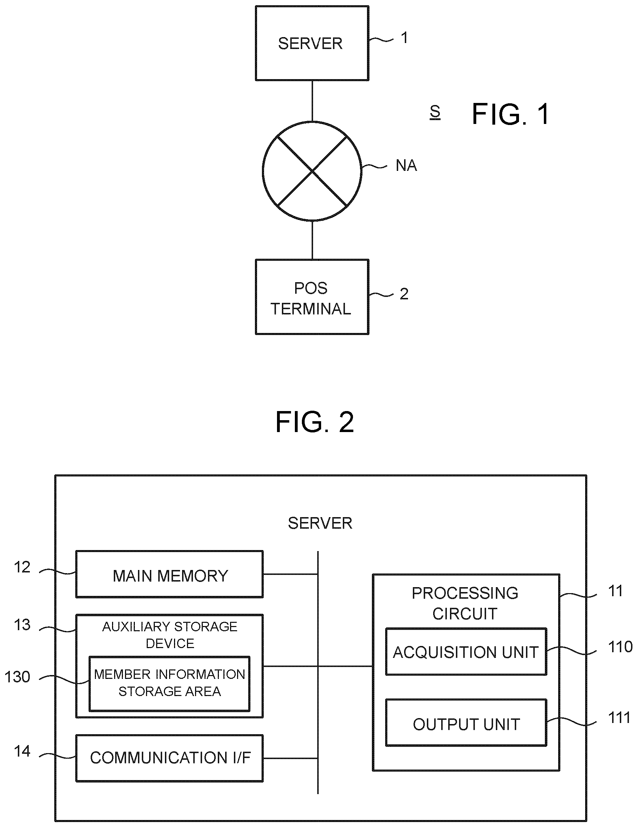

FIG. 1 is a block diagram illustrating a store system S. For example, the store system S is used in a store X.

The store system S includes a server 1 and a POS terminal 2. The servers 1 and the POS terminal 2 are communicably connected to each other via a network NA. For example, the network NA may comprise one or more networks, such as the Internet, a mobile communication network, and a local area network (LAN). The one or more networks may include a wireless network or may include a wired network.

Although FIG. 1 shows an embodiment in which the store system S includes one POS terminal 2, the store system S may include a plurality of POS terminals 2 having the same configuration.

The server 1 is a store server capable of communicating with the POS terminal 2 via the network NA. The server 1 is a device that stores various types of information. For example, the server 1 is a device capable of communicating with a device installed in the store X. The server 1 may be a device capable of communicating with devices installed in the store X and other stores. Hereinafter, the server 1 is also referred to as the information processing apparatus. A configuration example of the server 1 will be described later. The server 1 may be a server used in a cloud service.

The server 1 is a device that stores information necessary for transactions in the store X. The server 1 is a device that stores information necessary for transactions in the store X and other stores. For example, the server 1 stores user information of customers of the store X. The server 1 may store user information of customers of other stores. The user information indicates the member information of the customers. The member information includes, for example, a membership ID, a membership code, attribute data, and the like. The membership ID may be, for example, a code that can uniquely identify a customer as a member of a store. The membership ID is also referred to as a membership code. The membership code is also referred to as the member identification information. In the following description, a customer may be read as a user, a consumer, or a member.

The POS terminal 2 is a device that processes a transaction in the store X. For example, the POS terminal 2 has an item registration function. The POS terminal 2 processes registration of one or more transaction items by the item registration function. Hereinafter, registration of an item is also referred to as item registration. An item subject to a transaction is also referred to as a transaction item. The item registration is to register an item as a transaction item for purchase. For example, the item registration includes adding data relating to the transaction item to the data relating to the transaction. The data related to the transaction item is also referred to as transaction item data. The data relating to the transaction may include, for one transaction, item data for each transaction. Data on transactions is also referred to as transaction data. The POS terminal 2 may be operated by a user of the POS terminal 2. The user of the POS terminal 2 is mainly a customer. The POS terminal 2 is also referred to as an item registration device.

Transaction item data indicates details of a transaction item. The transaction item data may include an item code of the transaction item. The item code of the transaction item is identification information capable of uniquely identifying the transaction item. The transaction item data may include a price of the item. The price of an item is the price per transaction item. The transaction item data may include the quantity of the transaction item. The quantity of the transaction item is the number of transaction items included in one transaction.

The transaction item data may include information indicating the category of the item. The category indicates the type of notification target items. The category of the item is also referred to as the category of the notification target item. The information indicating the category of the notification target item includes information indicating whether the item is a notification target item. The notification indicates that the notification target item has been registered. The notification may include information indicating the type of the notification target item. The notification is also referred to as a store clerk call notification. The store clerk call notification is a notification for notifying the user of POS terminal 2 that the store clerk is being called. The notification may be a notification indicating that the store clerk needs to respond.

The notification target item indicates an item that needs to be notified to the store clerk. The notification target item indicates an item to be confirmed by the store clerk. The notification target item indicates an item that needs to be dealt with by the store clerk. The type of notification target items includes, for example, age-restricted items. The age-restricted items include, for example, alcoholic beverages, cigarettes, and the like. The age-restricted item is also referred to as an item that needs to be checked for age (i.e., an item requiring age confirmation or verification). Correspondence by a store clerk to an age-restricted item is confirmation of the customer's age, etc. The "correspondence" may be read as "confirmation" or "verification".

For example, the transaction data is stored in a transaction management server that manages each transaction. The transaction management server may be the server 1 or a different server.

For example, the POS terminal 2 has a payment function. The POS terminal 2 processes the settlement of the transaction based on the transaction data by the payment function. The completion of the payment by the POS terminal 2 includes completing the transaction. The POS terminal 2 is also referred to as the payment device having a payment function.

The payment method for settlement of the transaction includes offline payment and online payment. The offline payment is a settlement in which the POS terminal 2 does not need to cooperate with another device through the network NA. For example, the offline payment is a payment using cash, a gift certificate, or the like. The online payment is a payment executed by the POS terminal 2 in cooperation with another device that passes through the network NA. For example, the online payment is a credit card payment, an electronic money payment, a debit card payment, a code payment, or the like.

A configuration example of the server 1 will be described. FIG. 2 is a block diagram illustrating the server 1.

The server 1 is an apparatus including a processing circuit 11, a main memory 12, an auxiliary storage device 13, and a communication interface 14. The respective units constituting the server 1 are connected to each other so as to be able to input and output signals. In FIG. 2, the interface is described as "I/F".

The processing circuit 11 is a core component of the server 1. The processing circuit 11 includes one or more circuits that execute a plurality of processes with a plurality of functions. For example, the circuit is a processor, ASIC (Application Specific Integrated Circuit) or FPGA (field-Programmable Gate Array), but is not limited thereto. For example, the processor is a CPU (Central Processing Unit) or GPU (Graphics Processing Unit), but is not limited thereto. The processing circuit 11 loads a program stored in the auxiliary storage device 13 onto the main memory 12. The program is a program capable of causing the processing circuit 11 to execute the functions of the functional units described later.

The main memory 12 includes a non-volatile memory area and a volatile memory area. The non-volatile memory area of the main memory 12 stores an operating system and/or programs. The volatile memory area of the main memory 12 functions as a work area in which data is appropriately rewritten by the processing circuit 11. For example, the main memory 12 includes a ROM (Read Only Memory) as the non-volatile memory area. For example, the main memory 12 includes RAM (Random Access Memory) as the volatile memory area.

The auxiliary storage device 13 corresponds to an auxiliary storage portion of the server 1. The auxiliary storage device 13 includes one or more storage devices. The storage devices include, but are not limited to, an EEPROM (Electric Erasable Programmable Read-Only Memory), an HDD (Hard Disc Drive), an SSD (Solid State Drive), or a flash memory. The auxiliary storage device 13 stores the above-described programs, data used by the processing circuit 11 in performing various kinds of processes, and data generated by the processing circuit 11.

The auxiliary storage device 13 includes a member information storage area 130. The member information storage area 130 stores member information. The member information storage area 130 is updated by adding, updating, or deleting member information. The member information may be updated as appropriate. For example, the data indicating the age may be automatically updated based on the data indicating the date of birth.

The communication interface 14 includes various interfaces for communicatively connecting the servers 1 to other devices via the network NA in accordance with a known communication protocol such as Ethernet.

The hardware configuration of the server 1 is not limited to the above-described configuration. One or more of the above-described components of the server 1 may be omitted or modified, and one or more new components may be added thereto as appropriate.

The functional units realized by the processing circuit 11 will be described.

The processing circuit 11 performs the functions of an acquisition unit 110 and an output unit 111. Each unit realized by the processing circuit 20 may be realized by a controller including the processing circuit 11 and the main memory 12.

The acquisition unit 110 acquires attribute data of a customer or a member. The attribute data may include data such as the name, date of birth, address, gender, or age of the customer. The acquisition unit 110 acquires attribute data via the communication interface 14, for example, based on input data input via a user terminal used by the customer. The user terminal is, for example, a smartphone, a tablet terminal, or the like. The acquisition unit 110 may acquire attribute data based on an image including personal information captured by the user terminal via the communication interface 14. The acquisition unit 110 stores the attribute data as member information in the member information storage area 130. The acquisition unit 110 updates the member information based on acquisition, update, deletion, or the like of the attribute data.

The output unit 111 outputs the member information to the POS terminal 2 via the communication interface 14. The output unit 111 may output the membership information, for example, in response to a request from the POS terminal 2.

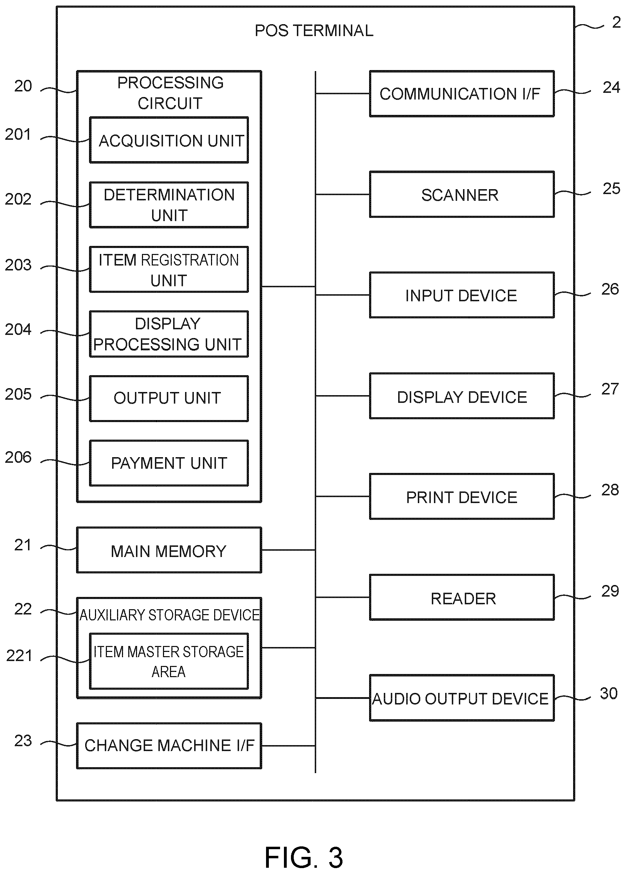

A configuration of the POS terminal 2 will be described. FIG. 3 is a diagram illustrating the POS terminal 2.

The POS terminal 2 includes a processing circuit 20, a main memory 21, an auxiliary storage device 22, a change machine interface 23, a communication interface 24, a scanner 25, an input device 26, a display device 27, a printing device 28, a reader 29, and an audio output device 30. The main memory 21, the auxiliary storage device 22, the change machine interface 23, the communication interface 24, the scanner 25, the input device 26, the display device 27, the printing device 28, the reader 29, and the audio output device 30 are connected to each other so that signals can be input and output. In FIG. 3, the interfaces are described as "I/F".

The processing circuit 20 corresponds to a core component of the POS terminal 2. The processing circuit 20 has the same hardware configuration as that of the processing circuit 11 described above. The processing circuit 20 executes a program stored in advance in the main memory 21 or the auxiliary storage device 22, thereby executing various processes.

The main memory 21 has a hardware configuration similar to that of the main memory 12 described above. The main memory 21 stores a program.

The auxiliary storage device 22 has the same hardware configuration as that of the auxiliary storage device 13 described above. The auxiliary storage device 22 stores programs, data used by the processing circuit 20 in performing various kinds of processes, and data generated by the processing circuit 20.

The auxiliary storage device 22 includes an item master storage area 221. The item master storage area 221 stores an item master database (hereinafter simply referred to as the item master). The data in the item master storage area 221 is updated by adding, updating, or deleting the item master. The data of the item master is data including various kinds of information about items such as an item code, a price, and an item name for each item. The data of the item master may include information indicating the type of each item. The type may be set for each item, or may be set for each type of item or each department.

The change machine interface 23 inputs and outputs data signals to and from an automatic change machine connectable to the POS terminal 2. For example, the change machine interface 23 receives input amount data from the automatic change machine. The change machine interface 23 outputs the change amount data to the automatic change machine. The automatic change machine dispenses bills and/or coins corresponding to the change amount according to the change amount data.

The communication interface 24 includes various interfaces that communicatively connect POS terminal 2 to other devices via the network NA in accordance with a predetermined communication protocol.

The scanner 25 is a device that reads various code symbols and acquires information from the code symbols. For example, the code symbol may be a barcode symbol or a two-dimensional code symbol. The code symbol may include a code symbol of an item representing its item code. The code symbol of the item is an image attached to the item. The code symbol may include a code symbol representing a membership code. The membership code is identification information that can uniquely identify a member. The code symbol representing the membership code may be an image attached to the card or an image displayable on the terminal of the customer. The code symbol may include a code symbol for code payment.

The input device 26 is a device capable of inputting data to the POS terminal 2. For example, the input device 26 may include a keyboard. The input device 26 may include a touch screen attached to the display device 27.

The display device 27 is a device capable of displaying various images under the control of the processing circuit 20. The display device 27 is mainly a display device for a customer. For example, the display device 27 is a liquid crystal display (LCD) or an EL(Electroluminescence) display or the like.

The printing device 28 is a printer for printing transaction details on a medium. For example, the medium is paper. For example, the printing device 28 is a thermal printer, an inkjet printer, or the like. In one embodiment, the printing device 28 issues a receipt showing transaction details, and the receipt may contain a field of the purchaser in the transaction.

For example, the transaction details include all or a part of the information on the store where the transaction was conducted, the information on the transaction date and time, and the information on the transaction. The transaction details may include information other than these information. For example, the information about the store where the transaction was conducted includes the name of the store. The information about the store where the transaction was conducted may include information other than this information. For example, the information on the transaction date and time includes the transaction date and time. The information on the transaction date and time may include information other than this information.

For example, the information on the transaction includes information on the transaction item for each transaction item. The information on transaction items includes one or more of the item code of the transaction, the name of the transaction item, the price of the transaction item, the number of the transaction items, the payment amount, and the type of each transaction item. The information on the transaction item may include information other than the above information.

The information about the transaction may include a total payment amount of the transaction. The information about the transaction may include a payment amount. The payment amount is the amount of payment for the transaction paid according to the payment method selected by the customer.

The reader 29 is a device that reads card data recorded on a card medium. The reader 29 may include a contact reader for reading card data recorded on a magnetic stripe of the card medium. The reader 29 may comprise a contactless reader for reading the card data recorded on the IC tag of the card medium. The IC tag includes an IC tip and an antenna.

The audio output device 30 is a device capable of outputting various sounds under the control of the processing circuit 20. For example, the audio output device 30 is a speaker.

Note that the hardware configuration of POS terminal 2 is not limited to the above-described configuration. Two or more of the above-described components of the POS terminal 2 may be omitted or modified, and one or more new components may be added thereto as appropriate.

The functions performed by the processing circuit 20 will be described. The processing circuit 20 performs the functions of an acquisition unit 201, a determination unit 202, an item registration unit 203, a display processing unit 204, an output unit 205, and a payment unit 206. Each function performed by the processing circuit 20 may be performed by the controller including the processing circuit 20 and the main memory 21.

The acquisition unit 201 acquires an item code based on a code symbol of an item. The acquisition unit 201 may acquire information on the item from the server 1 or another server that manages information on items based on their item codes. The acquisition unit 201 acquires a membership code of a customer. For example, the acquisition unit 201 acquires a membership code from a code symbol, which is read via the scanner 25 or the like. The acquisition unit 201 acquires, from the server 1, member information of the customer corresponding to the membership code via the communication interface 14.

The determination unit 202 determines, based on the acquired member information, whether the age of the customer is equal to or greater than a predetermined age. The predetermined age indicates, for example, an age at which an item requiring age confirmation can be purchased. For example, the predetermined age is 20 years old. The predetermined age may be set in advance by an administrator or the like of the store system S. The predetermined age may be updated by the administrator of the store system S or the like. The determination unit 202 may determine whether the age of the customer is equal to or greater than the predetermined age based on the information indicating the age included in the member information. The determination unit 202 may determine whether the age of the customer is equal to or greater than the predetermined age based on the information indicating the date of birth included in the member information. The determination unit 202 may store the determination result in the auxiliary storage device 22. The determination unit 202 may store the determination result as transaction data. The determination result indicates that the customer's age is the predetermined age or older, or the predetermined age or less. The determination unit 202 may store the determination result as a determination flag. For example, the determination flag may be set as "1" when the age is equal to or more than the predetermined age, and may be set as "0" when the age is less than the predetermined age.

The item registration unit 203 processes registration of one or more transaction items. The item registration unit 203 determines whether the registered transaction item is a predetermined item based on the data of the item master stored in the item master storage area 221. The predetermined item is, for example, an item requiring age confirmation. The item registration unit 203 performs the registration process according to the determination result by the determination unit 202.

The process according to the determination result includes skipping the age confirmation process when the customer's age is equal to or larger than the predetermined age. Skipping the age confirmation process includes not requiring an age confirmation process by a store clerk. Skipping the age confirmation process includes omitting the age confirmation process. Skipping the age confirmation process may include determining the age confirmation process to be done. The determination of the age confirmation process may include, for example, setting that the age confirmation is completed for the age-restricted item. Setting that the age confirmation is completed may include, for example, setting an age confirmation flag. For example, the age confirmation flag may be set as "1" when the age confirmation is completed, and may be set as "0" when the age confirmation is necessary. The completion of the age confirmation or the completion of the age confirmation corresponds to the fact that the age confirmation is unnecessary.

The process according to the determination result includes performing the age confirmation process when the customer's age is less than the predetermined age. The age confirmation process includes outputting a store clerk call notification. The store clerk call notification includes a message indicating that a store clerk call is being made. The message may be, for example, a text message such as "store clerk is on the way." Outputting the store clerk call notification includes outputting a store clerk call notification display instruction. The store clerk call notification display instruction is an instruction for displaying the store clerk call notification on the display device 27. The store clerk call notification display instruction may include information indicating the type of the age-restricted item.

Outputting the store clerk call notification includes outputting the store clerk call notification to an attendant terminal (not shown). The attendant terminal is, for example, a device used by a clerk of the store X. The attendant terminal is a device capable of communicating with POS terminal 2 via a network. For example, the networking is, for example, a LAN. The attendant terminal is a tablet terminal, a smart phone, a PC, or the like, but may be a dedicated device.

The age confirmation process includes a process of restricting the operation of the POS terminal 2. The process of restricting the operation is also referred to as operation restriction. The operation restriction includes, for example, a process such as a screen lock for restricting an operation such as a touch input by a customer via the input device 26. The operation restriction includes a process of restricting the item registration operation and the settlement operation by the customer.

The item registration unit 203 performs a process of canceling the operation restriction on the basis of the operation of the store clerk. The process of canceling the operation restriction includes canceling the store clerk call notification. Canceling the store clerk call notification includes disabling the store clerk call notification. The process of canceling the operation restriction includes enabling an operation such as a touch input by a customer. The process of canceling the operation restriction includes enabling the item registration operation and the payment operation by the customer. The item registration unit 203 may enable registration of another item based on the cancellation of the operation restriction by the operation of the store clerk. For example, the item registration unit 203 may set the age confirmation process to have been processed on the basis of the operation of the store clerk.

The item registration unit 203 cancels the item registration of the item based on the cancellation of the operation restriction by the operation of the store clerk. The cancellation includes deleting the registered item. The cancellation includes deleting the transaction item data of the corresponding item from the transaction data.

The display processing unit 204 controls the display device 27 to display an item registration image including a notification based on the determination result according to the determination result by the determination unit 202. The item registration image is an image for performing item registration. The notification based on the determination result includes a message indicating whether the age of the customer is equal to or more than the predetermined age. The message may be, for example, a text message such as "age confirmed", "age confirmation unnecessary", "under 20 years old", "age confirmation necessary", and the like.

The display processing unit 204 controls the display device 27 to display a store clerk call notification. The display processing unit 204 may control the display device 27 to display the store clerk call notification as a pop-up display. The display processing means 204 may output the store clerk call notification via the voice output device 30 in addition to or instead of the text message. The display processing unit 204 may turn on or blink a warning light connected to POS terminal 2 in addition to or instead of the text message.

The output unit 205 controls the communication interface 24 to output the membership code to the server 1. The output unit 205 may control the communication interface 24 to output a store clerk call notification to the attendant terminal. The output unit 205 may control the communication interface 24 to output the transaction data to the server 1.

The payment unit 206 processes the settlement of the transaction. The payment unit 206 controls the print device 28 to issue a receipt.

### (Display example)

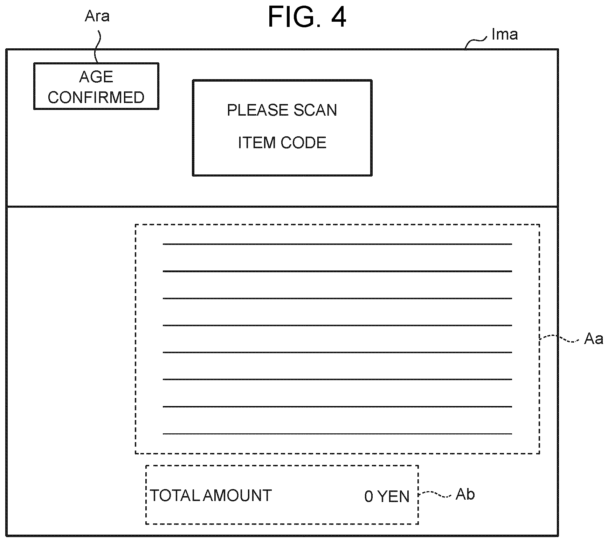

Images displayed on the display device 27 of the POS terminal 2 will be described. FIG. 4 is a diagram showing a screen displayed by the POS terminal 2 according to an embodiment.

FIG. 4 shows an item registration image Ima displayed on the display device 27. The item registered image Ima is an exemplary image displayed when the customer's age is a predetermined age or older. That is, the item registration image Ima indicates an item registration image in which the membership code is read by the POS terminal 2 prior to the item registration and the customer is at the predetermined age or older. The item registration image Ima includes a notification display area Ara, a transaction details display area Aa, and a total amount display area Ab.

The notification displaying area Ara is an area indicating an age-based notification. The age-based notification is a notification based on the determination result of the determination unit 202. In the example of FIG. 4, it is assumed that the POS terminal 2 determines that the age of the customer is equal to or greater than the predetermined age. The notification display area Ara includes a message indicating "age confirmed". The display device 27 may temporarily display the notification based on the age or may display the notification until the item registration is completed. Note that the notification based on the age is not limited to a text message, and may be an icon, a symbol, or the like. The age-based notification may include playing a video.

The transaction details display area Aa is an area for displaying information related to the transaction details. The total amount display area Ab is an area for displaying the total amount of the registered items.

According to this example, the processing circuit 20 can notify the customer of the determination of determining the age of the customer based on the member information. Therefore, the customer can recognize that the age confirmation has been performed. As a result, the store system S can improve convenience of the customer in the item registration.

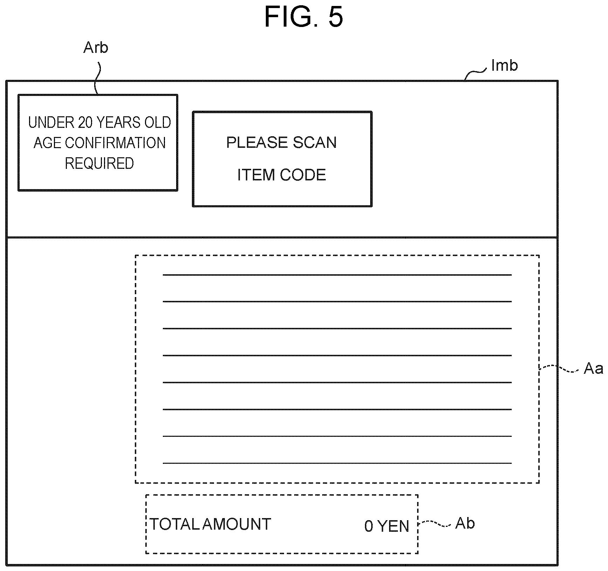

FIG. 5 is a diagram showing a screen displayed by the POS terminal 2 according to an embodiment.

FIG. 5 shows an item registration image Imb displayed on the display device 27. The item registered image Imb is an exemplary image displayed when the customer's age is under a predetermined age. The item registration image Imb indicates an item registration image in which the membership code is read by the POS terminal 2 prior to the item registration and the customer is under the predetermined age. The item registration image Imb includes a notification display area Arb, a transaction details display area Aa, and a total amount display area Ab.

The notification displaying area Arb is an area indicating an age-based notification. The age-based notification is a notification based on the determination result of the determination unit 202. In the example of FIG. 5, it is assumed that the POS terminal 2 determines that the age of the customer is under the predetermined age. The notification display area Arb includes a message indicating "under 20 years old, age confirmation required". The display device 27 may temporarily display the notification based on the age or may display the notification until the item registration is completed. Note that the notification based on the age is not limited to a text message, and may be an icon, a symbol, or the like. The age-based notification may include playing a video.

The transaction details display area Aa is an area for displaying information related to the transaction details. The total amount display area Ab is an area for displaying the total amount of the registered items.

According to this example, the processing circuit 20 can notify the customer of the determination of determining the age of the customer based on the member information. Therefore, the customer can recognize that the age confirmation is necessary when the customer purchases the item requiring age confirmation. As a result, the store system S can improve convenience of the customer in the item registration.

### (Operation example)

Processing of the store system S will be described. Note that, in the following description of the server 1 as a main entity, the server 1 may be replaced with the processing circuit 11. Similarly, in describing POS terminal 2 as a main component, POS terminal 2 may be replaced with the processing circuit 20. The process described below is merely an example, and each step may be changed. Further, steps can be omitted, replaced, and added as appropriate with respect to the process described below.

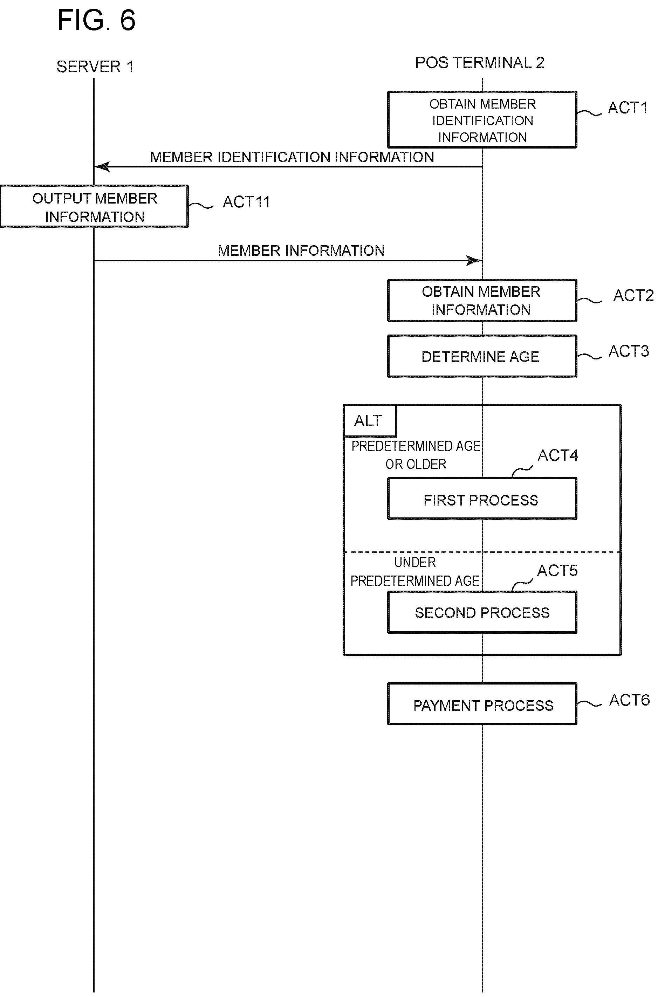

FIG. 6 is a sequence diagram illustrating a process performed by the store system S according to an embodiment. In the following process, it is assumed that a user (i.e., a customer) of the POS terminal 2 shops at the store X and registers an item using the POS terminal 2. In the following processing, it is assumed that the predetermined age is 20 years old. It is assumed that "a predetermined item" described below is an item requiring age confirmation.

The processing circuit 20 of the POS terminal 2 controls the display device 27 to display, for example, a membership code request message for requesting a membership code from a customer when registering an item. The membership code request message includes, for example, a message such as "Scan your membership card". The membership code request message may be at least one of text data, image data, audio data, and video data. The processing circuit 20 may read the membership code of the customer via the scanner 25, a camera or the like. The customer causes the membership code to be read based on the membership code request message.

The processing circuit 20 of the POS terminal 2 obtains the membership code (ACT 1). ACT 1 may be a process performed by the acquisition unit 201 realized by the processing circuit 20. In ACT 1, for example, the processing circuit 20 acquires a membership code based on a code symbol in which a membership code is recorded, via the scanner 25. The processing circuit 20 controls the communication interface 24 to output the membership code to the server 1.

The processing circuit 11 of the server 1 acquires the membership code from POS terminal 2 via the communication interface 14. This process may be performed by the acquisition unit 110 realized by the processing circuit 11. The processing circuit 11 acquires the member information stored in the member information storage area 130 based on the membership code.

The processing circuit 11 controls the communication interface 14 to output the membership information associated with the membership code to the POS terminal 2 (ACT 11). The process of ACT 11 may be performed by the output unit 111 realized by the processing circuit 11. It should be noted that the processing circuit 11 may output only data required for age determination to the POS terminal 2. The data necessary for the age determination is, for example, attribute data, date of birth, or data indicating the age.

The processing circuit 20 of the POS terminal 2 acquires the member information based on the membership code (ACT 2). ACT 2 process may be a process performed by the acquisition unit 201 realized by the processing circuit 20. In ACT 2, for example, the processing circuit 20 acquires member information associated with the membership code from the server 1 via the communication interface 24.

The processing circuit 20 determines whether the age of the customer is equal to or older than the predetermined age based on the member information (ACT 3). The processing of ACT 3 may be performed by the determination unit 202 realized by the processing circuit 20. In ACT 3, for example, the processing circuit 20 determines whether the age of the customer is equal to or older than the predetermined age based on the information indicating the age included in the member information. The processing circuit 20 may determine whether the age of the customer is equal to or older than the predetermined age based on the information indicating the date of birth.

If the customer's age is older than or equal to the predetermined age (ACT 3, YES), the process transitions from ACT 3 to ACT 4.

The processing circuit 20 executes a first process based on the fact that the age of the customer is equal to or more than the predetermined age (ACT 4). The first process is a process related to item registration in a case where the age of the customer is equal to or older than the predetermined age. The details of the first process will be described later.

If the customer's age is less than the predetermined age (ACT 3, NO), the process transitions from ACT 3 to ACT 5.

The processing circuit 20 performs a second process based on the fact that the age of the customer is less than the predetermined age (ACT 5). The second process is a process related to the item registration in a case where the age of the customer is less than the predetermined age. The details of the second process will be described later.

The processing circuit 20 performs a payment process based on the fact that the payment instruction has been acquired (ACT 6). ACT 6 may be performed by the payment unit 206 implemented by the processing circuit 20. In ACT 6, for example, the processing circuit 20 performs a transaction payment process based on the payment method, and ends the process. The processing circuit 20 may control the print device 27 to issue a receipt.

According to the above-described embodiments, the POS terminal 2 acquires the member information from the server 1 based on the membership code of the customer, determines whether the age of the customer is 20 or older based on the member information, and performs a process according to the determination result based on the registration of the item requiring age confirmation. Therefore, the POS terminal 2 can perform a process according to the determination result when the item requiring age confirmation is registered. For example, when the item requiring age confirmation is registered, the POS terminal 2 can skip the age confirmation process based on the fact that the age of the customer is 20 years old or older. When the age of the customer is 20 years old or older, the store clerk does not need to verify the customer's age. As a result, the POS terminal 2 can streamline the process even when the age-restricted item is being purchased. In this way, the POS terminal 2 can eliminate the process of age verification.

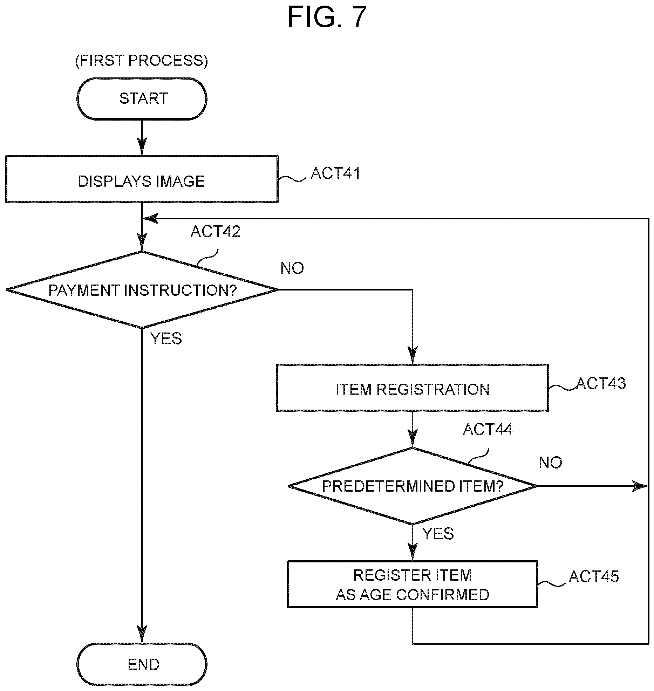

The first process at the above-described ACT 4 will be described. FIG. 7 is a flowchart illustrating the first process performed by the processing circuit 20 of POS terminal 2 according to an embodiment.

The processing circuit 20 controls the display device 27 to display an image for a customer of the predetermined age or older (ACT 41). The image for the customer of the predetermined age or older is an example of an item registration image including a notification based on a determination result. ACT 41 may be performed by the display processing unit 204 realized by the processing circuit 20. In the ACT 41, for example, the processing circuit 20 generates the item registration image including a notification based on the determination result based on the fact that the determination result is "predetermined age or older ". The notification based on the determination result includes a message indicating that the age of the customer is the predetermined age or older. The message may be, for example, a message such as "age confirmed", "age confirmation unnecessary", or the like.

The processing circuit 20 determines whether the payment instruction has been input by the customer (ACT 42). ACT 42 may be performed by the payment unit 206 implemented by the processing circuit 20. In ACT 42, for example, the processing circuit 20 determines whether the payment instruction has been acquired based on the operation of the customer. The user's operation is, for example, an operation of a payment button. When the payment instruction is acquired (ACT 42, YES), the process ends. If the payment instruction has not been acquired (ACT 42, NO), the process transitions from ACT 42 to ACT 43.

The processing circuit 20 performs a process of item registration (ACT 43). ACT 43 may be performed by the item registration unit 203 realized by the processing circuit 20. In ACT 43, for example, the processing circuit 20 registers an item based on an item registration operation performed by the user of the POS terminal 2. The item registration operation includes, for example, an operation of reading a code symbol attached to an item via the scanner 25. The item registration operation may include an operation of selecting an item registration button on the item registration image by touch input or the like. The processing circuit 20 acquires the item code recorded in the code symbol. The processing circuit 20 refers to the item master stored in the item master storage area 221 and acquires transaction item data of the item corresponding to the item code. The transaction item data includes data such as an item code, an item name, a price of an item, and a number of items. The transaction item data may include information indicating the type of the notification target item. The item corresponding to the item code is also referred to as a transaction item. Note that the processing circuit 20 may acquire the transaction item data of the item corresponding to the item code with reference to the item master stored in the server 1.

The processing circuit 20 determines whether the transaction item is a predetermined item (ACT 44). ACT 44 may be performed by the item registration unit 203 realized by the processing circuit 20. In ACT 44, for example, the processing circuit 20 determines whether the transaction item is a predetermined item on the basis of information indicating the type of the item. When the transaction item is a predetermined item (ACT 44, YES), the process transitions from ACT 44 to ACT 45. When the transaction item is not a predetermined item (ACT 44, NO), the process returns from ACT 44 to ACT 42.

The processing circuit 20 sets the transaction item to be age-confirmed (ACT 45). ACT 45 may be performed by the item registration unit 203 realized by the processing circuit 20. In ACT 45, for example, when the transaction item is a predetermined item, the processing circuit 20 skips the age confirmation process based on the fact that the age of the customer is equal to or more than the predetermined age. For example, when the transaction item is a predetermined item, the processing circuit 20 may refer to the determination result stored in the auxiliary storage device 22. The processing circuit 20 skips the age confirmation process for the transaction item on the basis of indicating that the determination result is equal to or more than a predetermined age. In an example, the processing circuit 20 skips the age confirmation process for the transaction item. For example, the processing circuit 20 does not perform age confirmation process on the transaction item. In another example, the processing circuit 20 sets the transaction item as having completed the age confirmation. The processing circuit 20 may set that the age confirmation is completed in the transaction item data of the transaction item. For example, the processing circuit 20 may set an age confirmation flag in the transaction item data.

According to this embodiment, the POS terminal 2 displays the item registered image including the notification based on the determination result according to the determination result. The POS terminal 2 may be configured to perform a different display based on the determination result. For example, when the determination result is "20 years old or older", the POS terminal 2 displays, on the display device 27, the item registration image including the notification indicating that the age-confirmation has been completed. Therefore, the customer can easily recognize that the age confirmation has been completed. The POS terminal 2 can improve convenience for a customer. In addition, the POS terminal 2 skips the age confirmation process for the item requiring age confirmation based on the determination result of "20 years old or older". Therefore, POS terminal 2 can skip the age confirmation process based on the fact that the item requiring age confirmation is registered. The POS terminal 2 does not issue a store clerk call notification even when an item requiring age confirmation is registered. The customer does not have to wait for an age confirmation by the store clerk. When the age of the customer is 20 years old or older, the store clerk does not need to verify the age by checking his identification. The POS terminal 2 can simplify the process even when the item requiring age confirmation is registered. As a result, the POS terminal 2 can streamline the process when the item requiring age confirmation is registered. In this way, the POS terminal 2 can eliminate the process related to the confirmation of identification.

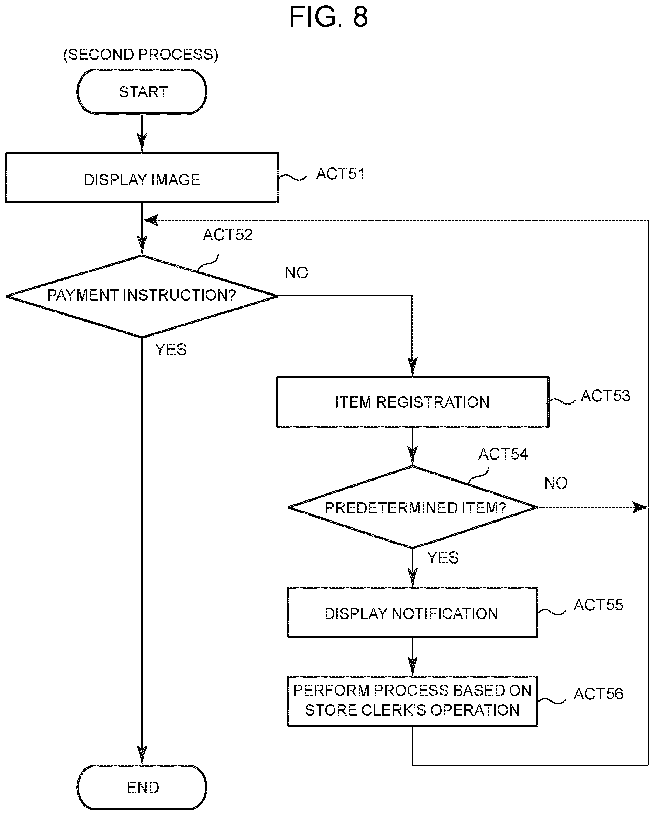

The second process in the above-described ACT 5 will be described. FIG. 8 is a flowchart illustrating the second process performed by the processing circuit 20 of POS terminal 2 according to an embodiment.

The processing circuit 20 controls the display device 27 to display the image for the customer under the predetermined age (ACT 51). The image for the customer under the predetermined age is an example of the item registration image including the notification based on the determination result. ACT 51 may be performed by the display processing unit 204 realized by the processing circuit 20. In ACT 51, for example, the processing circuit 20 generates an item registration image including a notification based on the determination result, based on the determination result being "under the predetermined age." The notification based on the determination result includes a message indicating that the age of the customer is less than the predetermined age. The message may be, for example, a message such as "under 20 years old, age confirmation is required".

Similarly to ACT 42, the processing circuit 20 determines whether the payment instruction has been input by the customer (ACT 52). ACT 52 may be performed by the payment unit 206 implemented by the processing circuit 20. In ACT 52, for example, the processing circuit 20 determines whether the payment instruction has been acquired based on the operation of the customer. When the payment instruction is acquired (ACT 52, YES), the process ends. If the payment instruction has not been acquired (ACT 52, NO), the process transitions from ACT 52 to ACT 53.

Similarly to ACT 43, the processing circuit 20 performs a process of registering an item (ACT 53). ACT 53 may be performed by the item registration unit 203 realized by the processing circuit 20.

Similarly to ACT 44, the processing circuit 20 determines whether the transaction item is a predetermined item (ACT 54). ACT 54 may be performed by the item registration unit 203 realized by the processing circuit 20. In ACT 54, for example, the processing circuit 20 determines whether the transaction item is a predetermined item on the basis of information indicating the type of the item. When the transaction item is a predetermined item (ACT 54, YES), the process transitions from ACT 54 to ACT 55. When the item is not a predetermined item (ACT 54, NO), the process returns from ACT 54 to ACT 52.

The processing circuit 20 controls the display device 27 to display a store clerk call notification with respect to the transaction item (ACT 55). ACT 55 may be performed by the display processing unit 204 realized by the processing circuit 20. In ACT 55, for example, when the transaction item is a predetermined item, the processing circuit 20 controls the display device 27 to display a store clerk call notification based on the fact that the age of the customer is less than the predetermined age. The customer cannot cancel the store clerk call notification displayed on the display device 27. The store clerk call notification may be canceled based on an operation by the store clerk. Note that the processing circuit 20 may output the store clerk call notification to an attendant terminal. This process may be performed by the output unit 205 realized by the processing circuit 20. The attendant terminal may display the store clerk call notification on its display device.

In ACT 55, for example, the processing circuit 20 may perform a process for restricting the operation of the POS terminal 2. The process of restricting the operation may be performed by the item registration unit 203 realized by the processing circuit 20. For example, when the age of the customer is less than the predetermined age, the processing circuit 20 restricts the operation by the customer based on the registration of the predetermined item.

The processing circuit 20 executes a process corresponding to the operation of the store clerk (ACT 56). The process of ACT 56 may be performed by the item registration unit 203 realized by the processing circuit 20. In ACT 56, for example, the processing circuit 20 cancels the operation restriction based on the operation of the store clerk. The processing circuit 20 cancels the store clerk call notification. For example, the store clerk causes the POS terminal 2 displaying the store clerk call notification to read the store clerk code via the scanner 25 or the reader 29. The store clerk code is, for example, a code symbol indicating identification information for identifying a store clerk. The POS terminal 2 can accept an operation of the store clerk based on the reading of the store clerk code. The POS terminal 2 receives an instruction to cancel the notification based on the operation of the store clerk. The POS terminal 2 cancels the store clerk call notification based on the release instruction. Note that the POS terminal 2 may enable a customer to operate a touch-input or the like on the basis of the cancel instruction.

In ACT 56, for example, the processing circuit 20 may be able to register another transaction item based on the fact that the operation restriction is canceled by the operation of the store clerk. The other transaction item indicates the item that the customer registers next to the predetermined item. This process may be performed by the item registration unit 203 realized by the processing circuit 20. For example, the processing circuit 20 may confirm registration of a predetermined item based on an operation of the store clerk. For example, when it is determined by the store clerk that the sale of the item requiring age confirmation is permitted, the processing circuit 20 may enable the registration of another transaction item based on the operation of the store clerk. For example, in a case where the age of the customer is different from the age based on the member information, or in a case where the age of the companion of the customer is equal to or greater than the predetermined age, age confirmation is performed by the store clerk, and the sale of the item requiring age confirmation may be permitted. In such a case, the processing circuit 20 may enable registration of another transaction item based on an operation of the store clerk. Note that the processing circuit 20 may determine the registration of a predetermined item based on the fact that the restriction of the operation is canceled by the operation of the store clerk and an instruction to confirm the registration is acquired.

In ACT 56, for example, the processing circuit 20 may cancel the registration of the transaction item by the store clerk operation. This process may be performed by the item registration unit 203 realized by the processing circuit 20. For example, the processing circuit 20 may delete the registered predetermined item based on the cancellation of the operation restriction by the operation of the store clerk. For example, when it is determined by the store clerk that the sale of the item requiring age confirmation is not permitted, the processing circuit 20 may delete the transaction item data of the item transaction based on the operation of the store clerk.

According to this embodiment, the POS terminal 2 displays the item registered images including the notification based on the determination result according to the determination result. The POS terminal 2 may be configured to perform a different display based on the determination result. For example, when the determination result is "less than 20 years old", the POS terminal 2 displays an item registration image including a notification indicating that age-confirmation is required on the display device 27. Therefore, the customer can easily recognize that the age confirmation is necessary when the item requiring age confirmation is registered. The POS terminal 2 can improve convenience for a customer. In addition, the POS terminal 2 performs an age confirmation processing based on the determination result of "less than 20 years old". Therefore, POS terminal 2 can issue a store clerk call notification based on the fact that the item requiring age confirmation is registered by a customer under the age of 20. The POS terminal 2 can reliably perform the age confirmation processing for a customer under 20 years old.

Further, when the customer is under 20 years old, the POS terminal 2 can restrict the operation by the customer based on the registration of the item requiring age confirmation, and can register another transaction item based on the cancellation of the restriction of the operation by the operation of the store clerk. Therefore, even if the age based on the member information of the customer is less than the predetermined age, if the store clerk permits the sale of the item requiring age confirmation by the age confirmation, the processing circuit 20 can register another transaction item based on the operation of the store clerk. Accordingly, the POS terminal 2 can improve the convenience of the customer in purchasing the item requiring age confirmation.

Further, the POS terminal 2 can delete the registration of the item requiring age confirmation by the operation of the store clerk. Therefore, the POS terminal 2 can prevent the sales of the item requiring age confirmation to the customer under the age of 20 from being performed based on the age confirmation. In this way, the POS terminal 2 can eliminate a process related to age verification.

### (Other Embodiments)

The item registration device may be realized by one device as described above with respect to POS terminal 2, or may be realized by a plurality of devices in which functions are distributed.

In the above explanation, the POS terminal 2 in which the customer can complete the process from the item registration to the settlement is exemplified, but is not limited thereto. The user of the POS terminal 2 may be a store clerk. The POS terminal 2 may be a shopping cart system having an item registration function. The POS terminal 2 may be a smartphone that can register an item as a mobile POS terminal owned by the customer himself/herself. The POS terminal 2 may be a POS terminal in which a store clerk manually registers an item. In these cases, the function of the payment unit 206 may be realized in the payment device that performs the payment process.

When the server has the function of the POS terminal 2, the server may be an item registration device. Further, the functions of the POS terminal 2 may be realized by a device with a tablet terminal communicably connected to the server.

The above-described embodiments may be applied to a method executed by an information processing apparatus. The above-described embodiments may be applied to a program capable of causing such an apparatus to execute each function. The above-described embodiments may be applied to a recording medium storing a program for executing each function.

Each of one or more circuits constituting the processing circuits 11 and 22 executes one or more processes of the above-described processes. When the processing circuit 11 or 22 is composed of a single circuit, the single circuit performs all the processes. When the processing circuit 11 or 22 includes a plurality of circuits, each of the circuits executes one or more of the processes. When the processing circuit 11 or 22 is composed of a plurality of circuits, those circuits may be included in one device or may be distributed in a plurality of devices.

The program performed by the processing circuit 11 or 20 may be stored in the server 1 or the POS terminal 2 in advance, or may be copied and installed via a network or a non-transitory computer readable storage medium, e.g., a CD-ROM or a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. A point-of-sale (POS) terminal for registering an item for purchase at a store, the POS terminal comprising:
a scanner (25);
a display (27); and
a processor configured to:
at a beginning of a transaction,
upon input of a customer code via the scanner, acquire customer information regarding a customer associated with the customer code,
determine an age of the customer based on the acquired customer information, and
determine whether the age of the customer is a predetermined age or older,
upon determining that the age of the customer is the predetermined age or older, start a first process for registering an item, the first process including:
generating a first screen image for item registration including first information indicating that the age of the customer has been verified, and controlling the display to display the first screen image, and
upon input of an item code via the scanner when the first screen image is displayed, registering an item associated with the item code regardless of whether the item is an age-restricted item,
upon determining that the age of the customer is not the predetermined age or older,
generating a second screen image for item registration including second information indicating that the age of the customer needs to be verified, and controlling the display to display the second screen image,
upon input of an item code via the scanner when the second screen image is displayed, determining whether an item associated with the item code is an age-restricted item,
upon determining that the item is an age-restricted item, suspending the item registration until a code of a store clerk is input via the scanner, and after the code of the store clerk is input, registering or not registering the age-restricted item depending on an operation by the store clerk, and
upon determining that the item is not an age-restricted item, registering the item, and
in response to a predetermined operation, perform a payment process on the registered item.

2. The POS terminal according to claim 1, wherein the processor is configured to, after determining that the item is an age-restricted item, control the display to display a message indicating that a store clerk has been called.

3. The POS terminal according to claim 1 or 2, further comprising:
a communication interface connectable to a terminal held by a store clerk, wherein
the processor is configured to, after determining that the item is an age-restricted item, control the communication interface to transmit a notification to the terminal held by the store clerk.

4. The POS terminal according to any one of claims 1 to 3, wherein the first screen image includes:
a first area for displaying text or an image corresponding to the first information,
a second area in which one or more registered items are listed, and
a third area in which a total amount of the registered items is displayed.

5. The POS terminal according to claim 4, wherein the second screen image includes:
a first area for displaying text or an image corresponding to the second information,
a second area in which one or more registered items are listed, and
a third area in which a total amount of the registered items is displayed.

6. The POS terminal according to any one of claims 1 to 5, further comprising:
a communication interface connectable to a store server installed in the store, wherein
the processor is configured to control the communication interface to transmit the input customer code to the store server, and then receive the customer information associated with the customer code from the store server.

7. The POS terminal according to any one of claims 1 to 6, wherein the POS terminal is a self-service POS terminal.

8. A method performed by a point-of-sale (POS) terminal for registering an item for purchase at a store, the method comprising:
at a beginning of a transaction,
upon input of a customer code via a scanner, acquiring customer information regarding a customer associated with the customer code,
determining an age of the customer based on the acquired customer information, and
determining whether the age of the customer is a predetermined age or older;
upon determining that the age of the customer is the predetermined age or older, starting a first process for registering an item, the first process including:
generating a first screen image for item registration including first information indicating that the age of the customer has been verified, and displaying the first screen image, and
upon input of an item code via the scanner when the first screen image is displayed, registering an item associated with the item code regardless of whether the item is an age-restricted item;
upon determining that the age of the customer is not the predetermined age or older,
generating a second screen image for item registration including second information indicating that the age of the customer needs to be verified, and displaying the second screen image,
upon input of an item code via the scanner when the second screen image is displayed, determining whether an item associated with the item code is an age-restricted item,
upon determining that the item is an age-restricted item, suspending the item registration until a code of a store clerk is input via the scanner, and after the code of the store clerk is input, registering or not registering the age-restricted item depending on an operation by the store clerk, and
upon determining that the item is not an age-restricted item, registering the item; and
in response to a predetermined operation, performing a payment process on the registered item.

9. The method according to claim 8, further comprising:
after determining that the item is an age-restricted item, displaying a message indicating that a store clerk has been called.

10. The method according to claim 8 or 9, further comprising:
after determining that the item is an age-restricted item, transmitting a notification to a terminal held by a store clerk.

11. The method according to any one of claims 8 to 10, wherein the first screen image includes:
a first area for displaying text or an image corresponding to the first information,
a second area in which one or more registered items are listed, and
a third area in which a total amount of the registered items is displayed.

12. The method according to claim 11, wherein the second screen image includes:
a first area for displaying text or an image corresponding to the second information,
a second area in which one or more registered items are listed, and
a third area in which a total amount of the registered items is displayed.

13. The method according to any one of claims 8 to 12, further comprising:
transmitting the input customer code to a store server, and then receiving the customer information associated with the customer code from the store server.

14. The method according to any one of claims 8 to 13, wherein the POS terminal is a self-service POS terminal.

15. A non-transitory computer readable storage medium storing a program causing a computer to execute a method for registering an item for purchase at a store according to any one of claims 8 to 14
